# EUROPEAN PATENT APPLICATION

(11) **EP 3 640 907 A1**
(43) Date of publication of application: **22.04.2020**
(21) Application number: 19199841.8
(22) Date of filing: 26.09.2019
(51) Int. Cl.: G08B 21/04, G08B 29/18

(54) **APPARATUS FOR DETECTING FALL AND RISE**

(30) Priority: 16.10.2018 KR 20180123167
(71) Applicant: Xandar Kardian, Seoul 04793 (KR)
(72) Inventor: YANG, Sun Jong, 26101 Gangwon-do (KR); CHOI, Jeong Woo, 04715 Seoul (KR); CHO, Hyun Ah, 08001 Seoul (KR)
(74) Representative: Viering, Jentschura & Partner mbB Patent- und Rechtsanwälte

(57) **Abstract**

Disclosed is an apparatus for detecting fall and rise. The apparatus includes a first sensor unit (100) disposed at a specific height of an indoor space and configured to sense a falling behavior of a resident (10) to below the specific height and a rising behavior of the resident to above the specific height, and a controller configured to determine whether or not the resident is in a dangerous state based on whether or not the rising behavior of the resident is sensed within a designated time after sensing the falling behavior of the resident by the first sensor unit.

## Description

### BACKGROUND

### (a) Technical Field

The present disclosure relates to an apparatus for detecting fall and rise which determines a resident's falling behavior by sensing a resident's movement.

### (b) Background Art

As interest in health care is increasing, interest in services assisting elderly persons or disabled persons, who have mobility difficulties, to perform their everyday lives is increasing. Since it is difficult for elderly persons or disabled persons, who live alone at home, to stay with guardians at all times, research on a service to sense sudden collapse of an elderly person or a disabled person is being carried out. A fall in which a person suddenly collapses is a phenomenon in which the person standing perpendicular to the ground collapses into a state in which the person is parallel to the ground and is thus injured. Such a fall may be more injurious to elderly persons or disabled persons, whose physical functions are deteriorated.

Conventionally, a sensor is attached to a resident as technology to sense a fall, but in this case, misrecognition by the sensor due to a resident's movement frequently occurs and the resident must always wear the sensor, which is inconvenient. Further, in various cases, i.e., during a process of attaching the sensor to the resident, in the case in which a battery of the sensor is discharged, etc., the sensor may not sense whether or not the resident falls.

### SUMMARY OF THE DISCLOSURE

The present invention has been made in an effort to solve the above-described problems associated with the prior art, and it is an object of the present invention to provide an apparatus for detecting fall and rise which determines a falling behavior of a resident living indoors.

It is another object of the present invention to provide an apparatus for detecting fall and rise which may increase reliability of determination of a falling behavior of a resident by distinguishing the falling behavior of the resident from other behaviors of the resident.

In one aspect, the present invention provides an apparatus for detecting fall and rise, including a first sensor unit disposed at a specific height of an indoor space and configured to sense a falling behavior of a resident to below the specific height and a rising behavior of the resident to above the specific height, and a controller configured to determine whether or not the resident is in a dangerous state based on whether or not the rising behavior of the resident is sensed within a designated time after sensing the falling behavior of the resident by the first sensor unit.

In a preferred embodiment, the first sensor unit may sense at least one of a heart rate, a movement or respiration of the resident.

In another preferred embodiment, the first sensor unit may measure a speed or an acceleration of the resident passing through the specific height, and the controller may determine that the resident falls, based on the speed or the acceleration.

In still another preferred embodiment, if the rising behavior of the resident is not sensed within the designated time after sensing the falling behavior of the resident by the first sensor unit, the controller may determine that the resident is in the dangerous state.

In yet another preferred embodiment, if the rising behavior of the resident is sensed within the designated time after sensing the falling behavior of the resident by the first sensor unit, the controller may determine that the resident is not in the dangerous state.

In still yet another preferred embodiment, the first sensor unit may sense a head part of the resident based on information acquired by analyzing a reflected signal, and if a speed or an acceleration of falling of the head part of the resident sensed by the first sensor is equal to or greater than the reference value, the controller may determine that the resident falls.

In a further preferred embodiment, the first sensor unit may include an impulse-radio ultra-wideband (IR-UWB) sensor.

In another further preferred embodiment, the apparatus may further include a second sensor unit configured to measure a position of the resident, and the second sensor unit may sense whether or not the resident falls down on a floor of the indoor space due to the falling behavior of the resident.

In still another further preferred embodiment, the second sensor unit may measure a distance between the second sensor unit and the resident.

In yet another further preferred embodiment, the second sensor unit may sense a change in the movement of the resident by modeling the indoor space into a 3D image.

In still yet another further preferred embodiment, the second sensor unit may be disposed at a higher height than the specific height.

In a still further preferred embodiment, the second sensor unit may be disposed on a ceiling of the indoor space.

In a yet still further preferred embodiment, the second sensor unit may include at least one of an impulse-radio ultra-wideband (IR-UWB) sensor, a light detection and ranging (LIDAR) device, a frequency-modulated continuous-wave radio detection and ranging (FMCW RADAR) device, or a Doppler RADAR device.

In another further preferred embodiment, the apparatus may further include a database configured to store behavior pattern information about movements of humans, and the controller may determine a state of the resident by comparing a pattern of movements of the resident sensed by the first sensor unit with the behavior pattern information stored in the database.

In still another further preferred embodiment, the database may store information about repetitive movements being capable of occurring in the indoor space, and the controller may determine that, out of the pattern of the movements of the resident sensed by the first sensor unit, information being the same as the information about repetitive movements stored in the database is not the pattern of the movements of the resident.

In yet another further preferred embodiment, the apparatus may further include a communication unit configured to output a warning message, if the controller determines that the resident is in the dangerous state.

Other aspects and preferred embodiments of the invention are discussed infra.

The above and other features of the invention are discussed infra.

### BRIEF DESCRIPTION OF THE DRAWINGS

The above and other features of the present invention will now be described in detail with reference to certain exemplary embodiments thereof illustrated in the accompanying drawings which are given hereinbelow by way of illustration only, and thus are not limitative of the present invention, and wherein:
FIG. 1 is a view illustrating an indoor space in which sensors in accordance with one embodiment of the present invention are installed;
FIG. 2 is a block diagram of an apparatus for detecting fall and rise in accordance with one embodiment of the present invention;
FIG. 3 is a block diagram of a database of FIG. 2;
FIGS. 4A to 4C are views illustrating the apparatus for detecting fall and rise in accordance with one embodiment of the present invention as sensing a fall and a rise of a resident; and
FIG. 5 is a flowchart representing a method for detecting fall and rise in accordance with one embodiment of the present invention.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes, will be determined in part by the particular intended application and use environment.

In the figures, reference numbers refer to the same or equivalent parts of the present invention throughout the several figures of the drawings.

### DETAILED DESCRIPTION

Hereinafter, reference will be made in detail to various embodiments of the present invention, examples of which are illustrated in the accompanying drawings and described below. While the invention will be described in conjunction with exemplary embodiments, it will be understood that the present description is not intended to limit the invention to the exemplary embodiments. On the contrary, the invention is intended to cover not only the exemplary embodiments, but also various alternatives, modifications, equivalents and other embodiments within the spirit and scope of the invention as defined by the appended claims. In the following description of the embodiments, the same or similar elements are denoted by the same reference numerals even though they are depicted in different drawings.

In the following description of the embodiments, the embodiments will be described with reference to cross-sectional views and/or plan views corresponding to ideal exemplary views of the present invention. In the drawings, thicknesses of films and regions may be exaggerated for effective description of technical content. Therefore, forms of the exemplary views may be modified due to manufacturing technologies and/or allowable errors. Therefore, the embodiments of the present invention are not limited to illustrated specific forms and include form modifications generated depending on manufacturing processes. For example, an etching area illustrated as being formed at a right angle may be formed to be rounded or to have designated curvature. Therefore, regions exemplarily illustrated in the drawings have approximate properties, and shapes of the regions exemplarily illustrated in the drawings exemplarily represent specific types of regions of a device and do not limit the scope of the invention.

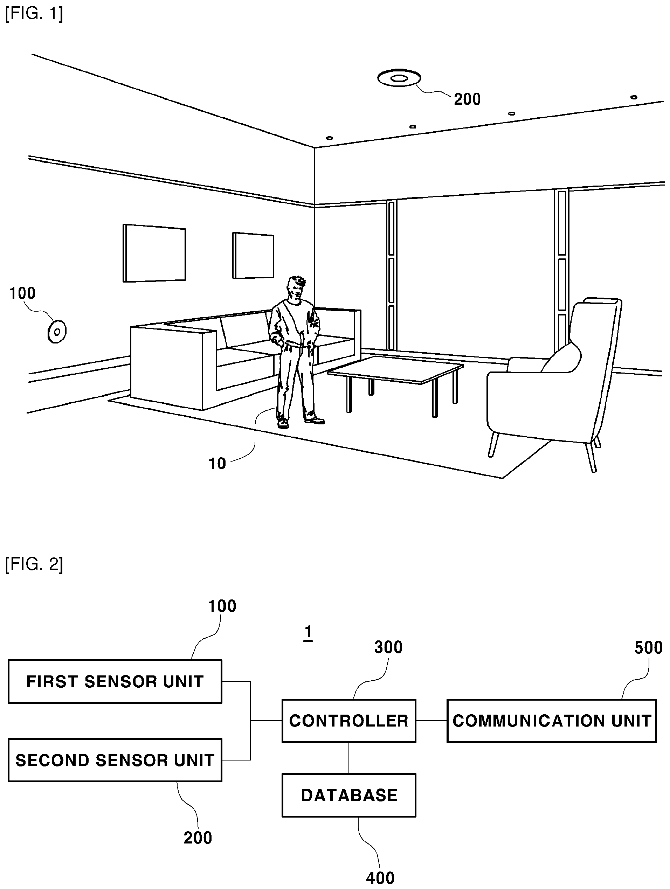

FIG. 1 is a view illustrating an indoor space in which sensors in accordance with one embodiment of the present invention are installed, and FIG. 2 is a block diagram of an apparatus for detecting fall and rise in accordance with one embodiment of the present invention.

Referring to FIGS. 1 and 2, an apparatus for detecting fall and rise 1 may be disposed in an indoor space, in which persons reside, and detect a falling behavior of a resident. The apparatus for detecting fall and rise 1 may include a first sensor unit 100, a second sensor unit 200, a controller 300, a database 400 and a communication unit 500. In the apparatus for detecting fall and rise 1, the first sensor unit 100, the controller 300, the database 400 and the communication unit 500 may be configured as one module, and the second sensor unit 200, the controller 300, the database 400 and the communication unit 500 may be configured as one module. That is, the controller 300, the database 400 and the communication unit 500 may be modularized together with a sensor unit. However, the disclosure of the present invention is not limited thereto, and the database 400 may be separately provided.

The first sensor unit 100 may be disposed at a specific height of the indoor space and sense a falling behavior of the resident to below the specific height and a rising behavior of the resident to above the specific height. For example, the first sensor unit 100 may be disposed at a knee height of the resident, and the resident's knee height may be about 50 cm to 70 cm. However, the first sensor unit 100 is not limited to the specific height. The specific height at which the first sensor unit 100 is disposed may be a height just above the floor of the indoor space so as to detect the falling behavior of the resident. The first sensor unit 100 may receive a signal reflected by a reflector located at the specific height, and thus sense a change in the position of the reflector or a change in the speed or the acceleration of the reflector. Therefore, the first sensor unit 100 may sense a speed and/or an acceleration of the resident passing through the specific height while falling and a change in the position of the resident depending on the falling behavior of the resident, thus being capable of sensing whether or not the resident falls. Further, the first sensor unit 100 may sense a speed and/or an acceleration of the resident passing through the specific height while rising and a change in the position of the resident depending on the rising behavior of the resident, thus being capable of sensing whether or not the resident rises. For example, the first sensor unit 100 may sense a head part of the resident by analyzing a reflected signal. The first sensor unit 100 may output a signal to sense movement, biometric information, etc. of the resident, and receive a signal reflected by the resident. Here, the first sensor unit 100 may determine a body part of the resident by analyzing a pattern of the reflected signal. The first sensor unit 100 may sense movement of the head part among the various kinds of movements of the resident.

The first sensor unit 100 may be one of an impulse-radio ultra-wideband (IR-UWB) sensor, a light detection and ranging (LIDAR) device, a frequency-modulated continuous-wave radio detection and ranging (FMCW RADAR) device, and a Doppler RADAR device. Particularly, the first sensor unit 100 may be an IR-UWB sensor. IR-UWB is a radio technology which uses a frequency band of 500 MHz or more or has a value of 25% or more defined as a fractional bandwidth. The fractional bandwidth means a signal bandwidth of a device divided by a center frequency thereof. IR-UWB is a radio technology which uses a wideband frequency, and has various advantages, such as high range resolution, transmittance, robustness to narrowband noise, and compatibility with other devices sharing frequencies therewith. For example, IR-UWB has resolution of a high precision range of 1 cm or less, and may thus detect fine movement of a target object.

An impulse-radio ultra-wideband RADAR (hereinafter, referred to as UWB RADAR) system, in which such IR-UWB is combined with RADAR, is a RADAR technology which recognizes the surrounding circumstances by transmitting an impulse signal having wideband characteristics with a very short duration time and then receiving a signal reflected by an object and/or a person. In the UWB RADAR system, a signal generation unit generates an impulse signal having a duration of several nano-seconds to several pico-seconds and radiates the impulse signal at a wide angle or a narrowband angle through a transmission antenna. The radiated signal may be reflected by various objects or persons, and a reflected signal may be converted into a digital signal through a reception antenna and an analog-to-digital converter (ADC).

The first sensor unit 100 may sense biometric information of the resident. The biometric information may include at least one of a heart rate, movement or respiration of the resident. The first sensor unit 100 may sense movement of the breast or abdomen of the resident by receiving a signal reflected by the resident, and thereby sense the heart rate or respiration of the resident. Further, the first sensor unit 100 may sense the movement of the resident by receiving a signal reflected in real time. Further, the first sensor unit 100 may sense the size and shape of the resident by receiving the signal reflected in real time. Therefore, the first sensor unit 100 may determine a current state of the resident by measuring biometric information of the resident, such as heart rate, movement or respiration.

The second sensor unit 200 may sense a current position of the resident and a current state of the resident. The second sensor unit 200 may sense whether or not the resident currently falls down on the indoor floor by measuring a distance between the second sensor unit 200 and the resident. The second sensor unit 200 may determine that the resident falls down on the indoor floor, when the distance between the second sensor unit 200 and the current resident is similar to a distance between the floor and a ceiling of the indoor space within a distance deviation of a set range. Further, if the first sensor unit 100 senses that the resident falls, the second sensor unit 200 may detect the current state of the resident and thus sense information forming the basis of determination as to whether or not the resident actually falls or whether or not the first sensor unit 100 erroneously determines that the resident falls depending on the movement of the resident. For example, if the resident performs light exercise indoors, the first sensor unit 100 may sense that the resident falls. Here, the second sensor unit 200 may sense that the resident is rising now. The second sensor unit 200 may be disposed at a higher height than the specific height at which the first sensor unit 100 is disposed. For example, the second sensor unit 200 may be disposed on the ceiling of the indoor space.

The second sensor unit 200 may perform modeling of the indoor space into a 3D image. The second sensor unit 200 may include at least one of an impulse-radio ultra-wideband (IR-UWB) sensor, a light detection and ranging (LIDAR) device, a frequency-modulated continuous-wave (FMCW) RADAR device, or a Doppler RADAR device. A plurality of second sensor units 200 may be provided to perform modeling of the indoor space into a 3D image. The second sensor unit 200 may sense a change in the movement of the resident, a sudden change in the position of the resident, and an abnormal behavior pattern of the resident in the indoor space. The second sensor unit 200 may sense the movement of the resident based on the modeled 3D image, and thus sense a falling behavior of the resident. That is, the second sensor unit 200 may be an element to complement the first sensor unit 100 so as to precisely sense the falling behavior of the resident.

The controller 300 may determine whether or not the resident is in a dangerous state based on whether or not a rising behavior of the resident occurs within a designated time after sensing the falling behavior of the resident. The controller 300 may determine the state of the resident based on the information sensed by the first sensor unit 100 and the second sensor unit 200.

For example, if the first sensor unit 100 senses a rising behavior of the resident within the designated time after sensing the falling behavior of the resident, the controller 300 may determine that the resident is not in the dangerous state. If the falling behavior of the resident occurs but the resident falls over by mistake, the resident generally rises within the designated time. In this case, the resident is not in the dangerous state. Therefore, the first sensor unit 100 senses the movement of the resident for the designated time after sensing the falling behavior of the resident, and the controller 300 determines that there is nothing wrong with the resident, when the resident rises within the designated time. The designated time may mean a time which is predetermined by a designer.

Further, for example, if the first sensor unit 100 senses no rising behavior of the resident within the designated time after sensing the falling behavior of the resident, the controller 300 may determine that the resident is in the dangerous state. If there is something wrong with the resident, the resident may not rise within the designated time after the resident falls. Therefore, if the first sensor unit 100 senses no rising behavior of the resident within the designated time after the resident falls, the controller 300 may determine that the resident is in the dangerous state.

The controller 300 may determine that the resident falls, if the head part of the resident sensed by the first sensor unit 100 passes through the specific height at a speed and/or an acceleration of a reference value or more. Here, the controller 300 may determine the falling behavior and the rising behavior of the resident based on changes in the position and the movement of the resident sensed by the second sensor unit 200. If the first sensor unit 100 senses that the resident falls, the second sensor unit 200 may detect the current state of the resident and thus sense information forming the basis of determination as to whether or not the resident actually falls or whether or not the first sensor unit 100 erroneously determines that the resident falls depending on the movement of the resident. For example, if the resident performs light exercise indoors, the first sensor unit 100 may sense that the resident falls. Here, the second sensor unit 200 may transmit sensed information indicating that the resident is rising now to the controller 300, and the controller 300 may determine that the resident is not in the dangerous state or that the resident does not fall, based on the information sensed by the second sensor unit 200.

The database 400 may store information necessary to analyze information sensed by the first sensor unit 100 and the second sensor unit 200 in the indoor space. For example, the database 400 may include information used to distinguish movements other than the movements of the resident, among movements capable of being sensed in the indoor space. The controller 300 may analyze the information sensed by the first sensor unit 100 and the second sensor unit 200 based on the information stored in the database 400.

The communication unit 500 may output a warning message, if the controller 300 determines that the resident is in the dangerous state. As one example, the communication unit 500 may output a warning sound indicating that the resident is in the dangerous state. As another example, the communication unit 500 may transmit the warning message to at least one terminal located outdoors using a wireless communication method. Here, the at least one terminal may be a terminal possessed by a guardian of the resident, or be terminals possessed by unspecified individuals. If the at least one terminal is a terminal of a guardian of the resident, the guardian may recognize that there is something wrong with the resident. If the at least one terminal corresponds to terminals of unspecified individuals, the unspecified individuals may recognize that there is something wrong with the resident living indoors and take separate measures. As yet another example, the communication unit 500 may transmit a warning message to a hospital and an emergency medical center using a wireless communication method. Here, the communication unit 500 may output information including an address of a residence of the resident together with the warning message. The wireless communication method may include a Bluetooth method, an RF communication method, a near field communication (NFC) method, or the like. Further, the wireless communication method may use signals output by the first sensor unit 100 and the second sensor unit 200 to sense movement of the resident. That is, the wireless communication method may be a method for outputting signals through an impulse-radio ultra-wideband (IR-UWB) sensor, a light detection and ranging (LIDAR) device, a frequency-modulated continuous-wave (FMCW) RADAR device, or a Doppler RADAR device.

In accordance with the embodiment of the present invention, the apparatus for detecting fall and rise 1 may increase reliability of determination of the falling behavior of the resident by sensing where or not both the falling behavior and the rising behavior of the resident occur. The apparatus for detecting fall and rise 1 may more accurately determine whether or not the resident falls due to a health problem by determining the falling behavior of the resident based on whether or not the resident rises within the designated time after the falling behavior of the resident.

Further, the apparatus for detecting fall and rise 1 may distinguish the case in which the resident falls due to a health problem, the case in which the resident falls over by mistake, and the case in which the resident performs exercise from one another based on information sensed by the first sensor unit 100 and the second sensor unit 200. Therefore, the apparatus for detecting fall and rise 1 may increase a recognition rate in sensing of the falling behavior of the resident.

Moreover, when the apparatus for detecting fall and rise 1 determines that the resident falls, the apparatus for detecting fall and rise 1 automatically outputs a warning message, and thus, persons receiving the warning message may prepare for occurrence of secondary accidents of the resident having a health problem.

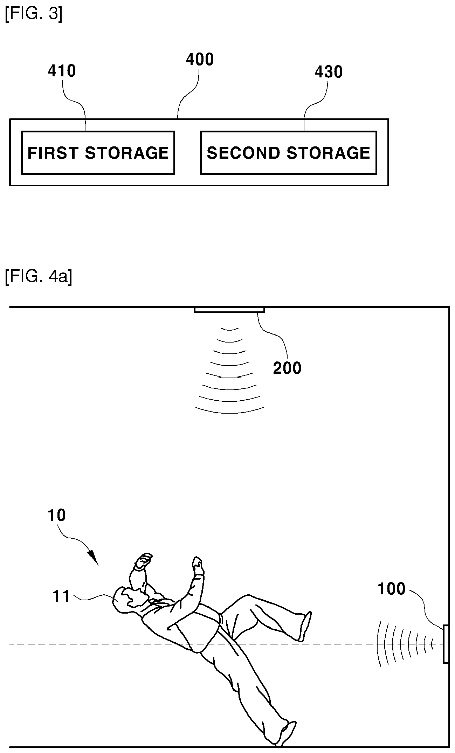

FIG. 3 is a block diagram of the database of FIG. 2.

Referring to FIGS. 2 and 3, the database 400 may include a first storage 410 and a second storage 430. The database 400 may store information used to accurately analyze a falling behavior of the resident through the controller 300 based on various pieces of information acquired through the first sensor unit 100 and the second sensor unit 200.

The first storage 410 may store information about repetitive movements that may occur indoors. A repetitive movement may mean a movement which is repeated on a designated cycle. For example, the repetitive movements may include a rotation of a fan, a movement of a second hand of a clock, etc. The controller 300 may determine that, among information about repetitive movements of objects sensed by the first sensor unit 100 and the second sensor unit 200, information which is the same as the information about repetitive movements stored in the database 400 is not information about the movement of the resident or biometric information of the resident. That is, the controller 300 may analyze whether or not the resident is in the dangerous state using only the movement of the resident and the biometric information of the resident out of various pieces of information measured by the first sensor unit 100 and the second sensor unit 200.

The second storage 430 may store first information about sizes, shapes, etc. of humans, second information about heart rates, respiration and movements of humans, and behavior pattern information about movements of humans, acquired through machine learning. The first sensor unit 100 and the second sensor unit 200 may sense the size of the resident and the head part of the resident based on the first information stored in the second storage 430. That is, the first sensor unit 100 and the second sensor unit 200 may determine which part of sensed signals corresponds to the head part of the resident, based on the first information. The controller 300 may detect whether or the signals sensed by the first sensor unit 100 and the second sensor unit 200 are signals regarding a human's heart rate, signals regarding human's respiration, or signals regarding human's movements through comparison with the second information. The controller 300 may determine the state of the resident by comparing a pattern of the movements of the resident sensed by the first sensor unit 100 and the second sensor unit 200 with the behavior pattern information. For example, the behavior pattern information may include various pieces of information, such as movements that a human conducts during exercise, a falling behavior in which a human suddenly falls, movements that a human takes after falling, etc. Therefore, the controller 300 may detect the meaning of a current movement taken by the resident by matching the signals sensed by the first sensor unit 100 and the second sensor unit 200 with the behavior pattern information.

In accordance with the embodiment of the present invention, the apparatus for detecting fall and rise 1 may accurately detect the state of the resident using both the first sensor unit 100 and the second sensor unit 200, and accurately detect the meaning of a current movement taken by the resident by comparing signals sensed by the first sensor unit 100 and the second sensor unit 200 with the information stored in the database 400.

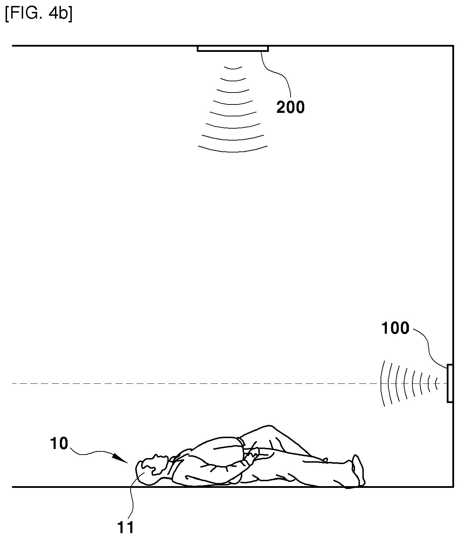

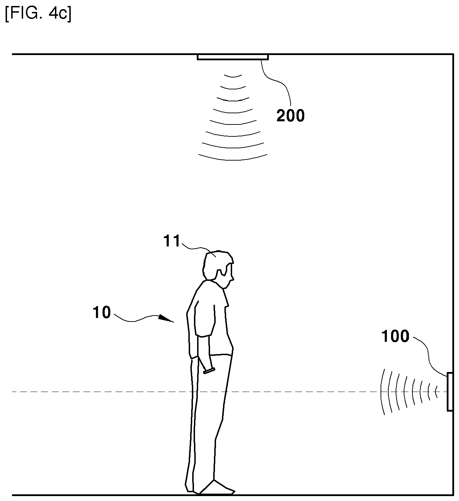

FIGS. 4A to 4C are views illustrating the apparatus for detecting fall and rise in accordance with one embodiment of the present invention as sensing a fall and a rise of a resident. FIG. 4A is a view illustrating that, when the resident falls, the apparatus for detecting fall and rise senses the fall of the resident, FIG. 4B is a view illustrating that the apparatus for detecting fall and rise senses a lying state of the resident after falling, and FIG. 4C is a view illustrating that the apparatus for detecting fall and rise senses the rise of the resident after falling.

Referring to FIGS. 2 and 4A, the first sensor unit 100 may sense a falling behavior of a resident 10 to below a specific height. The first sensor unit 100 may be disposed at the specific height in an indoor space. The first sensor unit 100 may measure a speed or acceleration of falling of the resident 10. In more detail, the first sensor unit 100 may sense whether or not the resident 10 falls by measuring a speed or acceleration of falling of a head part 11 of the resident 10. When the speed or acceleration of falling of the head part 11 of the resident 10 is equal to or greater than a predetermined reference value, the controller 300 may determine that the resident 10 falls. The second sensor unit 200 may perform modeling of the indoor space into a 3D image, and thus sense the falling movement of the resident 10. The controller 300 may accurately detect whether or not the resident 10 falls by matching the movement of the resident 10 sensed by the second sensor unit 200 with the behavior pattern information stored in the database 400.

Referring to FIGS. 2 and 4B, the first sensor unit 100 may sense whether or not a rising behavior of the resident 10 occurs after sensing the falling behavior of the resident 10. The second sensor unit 200 may determine whether or not the resident 10 falls down on the indoor floor by measuring a distance from the second sensor unit 200 to the resident 10. Further, the second sensor unit 200 may measure a movement of the resident 10 falling down on the indoor floor, and the controller 300 may determine the state of the resident 10 based on information sensed by the second sensor unit 200 and the behavior pattern information stored in the database 400. For example, the controller 300 may determine whether or not the resident 10 intentionally lies on the floor or whether or not the resident 10 falls due to a health problem based on the behavior pattern information including various pieces of information, such as movements which may be taken by the resident 10 after falling. In general, if the resident 10 falls due to a health problem, the resident 10 cannot change his/her position and move at a high speed after falling. Since information about such movements of the resident 10 is stored in the database 400, the controller 300 may determine the state of the resident 10 after falling. If the controller 300 determines that the resident 10 is in the dangerous state, the controller 300 may control the communication unit 500 to output a warning message.

Referring to FIGS. 2 and 4C, after sensing the falling behavior of the resident 10, the first sensor unit 100 may sense whether or not a rising behavior of the resident 10 occurs. The second sensor unit 200 may determine whether or not the resident 10 falls down on the indoor floor by measuring a distance from the second sensor unit 200 to the resident 10. If the first sensor unit 100 senses the rising behavior of the resident 10 to above the specific height, the controller 300 may determine that the resident 10 is not in the dangerous state.

The disclosure of the invention is not limited to the above-described examples, and both the first sensor unit 100 and the second sensor unit 200 may sense a falling behavior and a rising behavior of the resident 10. The first sensor unit 100 may sense the falling behavior and the rising behavior of the resident 10 based on the specific height, and the second sensor unit 200 may determine whether or not a movement of the resident 10 is the falling behavior or the rising behavior using the 3D image generated through modeling.

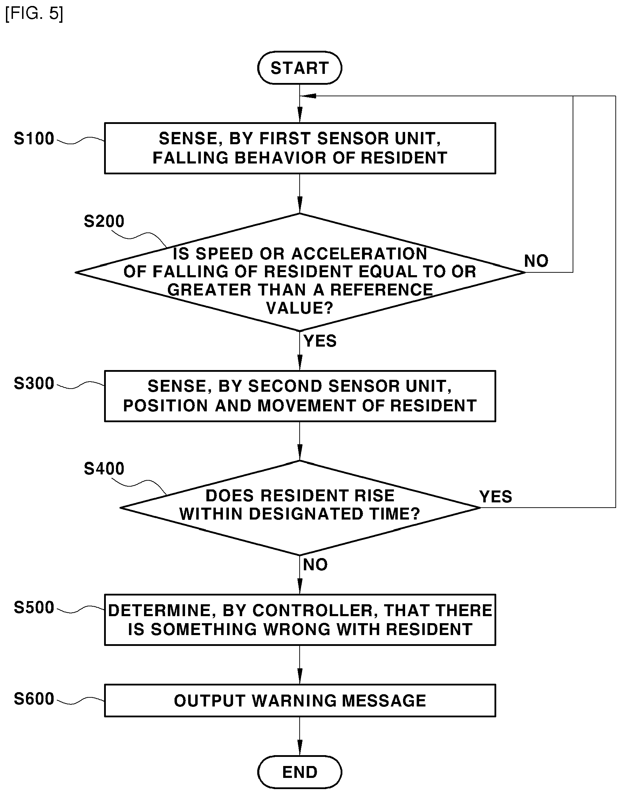

FIG. 5 is a flowchart representing a method for detecting fall and rise in accordance with one embodiment of the present invention.

Referring to FIG. 5, the first sensor unit may sense a falling behavior of a resident. The first sensor unit may sense whether or not the resident falls based on a specific height (S100).

The controller may determine whether or not the resident falls based on whether or not a speed and/or an acceleration of falling of the resident sensed by the first sensor unit are equal to or greater than the reference values. The reference values may be predetermined by a designer. If the speed and/or the acceleration of falling of the resident sensed by the first sensor unit are less than the reference values, the controller may determine that the resident intentionally moves to below the specific height (S200).

If the speed and/or the acceleration of falling of the resident are equal to or greater than the reference values, the second sensor unit may sense a position and movement of the resident. However, the second sensor unit may sense the position and movement of the resident in real time regardless of the falling behavior of the resident. If the resident falls, the second sensor unit may sense whether or not the resident falls down on the floor. That is, the second sensor unit may serve to complement the first sensor unit (S300).

The first sensor unit and the second sensor unit may sense whether or not the resident rises within a designated time after falling. If the resident rises within the designated time, the controller may determine that the resident is not in the dangerous state (S400).

If the resident does not rise within the designated time after falling, the controller may determine that there is something wrong with the resident. If the resident does not rise after the designated time, the controller may determine that there is something wrong with the resident due to the falling behavior (S500). Therefore, the controller may control the communication unit to output a warning message indicating that the resident is in the dangerous state (S600).

As is apparent from the above description, an apparatus for detecting fall and rise in accordance with one embodiment of the present invention senses whether or not a falling behavior and a rising behavior of a resident occur, and may thus increase reliability of determination of the falling behavior of the resident. The apparatus for detecting fall and rise determines the falling behavior of the resident based on whether or not the resident rises within a designated time after the falling behavior of the resident, and may thus more accurately determine whether or not the resident falls due to a health problem.

The apparatus for detecting fall and rise in accordance with one embodiment of the present invention may distinguish the case in which the resident falls due to a health problem, the case in which the resident falls over by mistake, and the case in which the resident performs exercise from one another, based on information sensed by a first sensor unit and a second sensor unit. Therefore, the apparatus for detecting fall and rise may increase a recognition rate in sensing of the falling behavior of the resident.

The apparatus for detecting fall and rise in accordance with one embodiment of the preset invention automatically outputs a warning message, upon determining that the resident falls, and thus, persons receiving the warning message may prepare for occurrence of secondary accidents of the resident having a health problem.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. An apparatus for detecting fall and rise, comprising:
a first sensor unit disposed at a specific height of an indoor space and configured to sense a falling behavior of a resident to below the specific height and a rising behavior of the resident to above the specific height; and
a controller configured to determine whether or not the resident is in a dangerous state based on whether or not the rising behavior of the resident is sensed within a designated time after sensing the falling behavior of the resident by the first sensor unit, wherein:
the first sensor unit measures a speed or an acceleration of the resident by receiving a signal reflected by the resident passing through the specific height;
the controller determines that the resident falls, if the speed or the acceleration is a reference value or more; and
the first sensor unit comprises an impulse-radio ultra-wideband (IR-UWB) sensor.

2. The apparatus of claim 1, wherein the first sensor unit senses at least one of a heart rate, a movement or respiration of the resident.

3. The apparatus of claim 1 or 2, wherein, if the rising behavior of the resident is not sensed within the designated time after sensing the falling behavior of the resident by the first sensor unit, the controller determines that the resident is in the dangerous state.

4. The apparatus of an one of claims 1 to 3, wherein, if the rising behavior of the resident is sensed within the designated time after sensing the falling behavior of the resident by the first sensor unit, the controller determines that the resident is not in the dangerous state.

5. The apparatus of claim 1 or 2, wherein:
the first sensor unit senses a head part of the resident based on information acquired by analyzing the reflected signal; and
if a speed or an acceleration of falling of the head part of the resident sensed by the first sensor is equal to or greater than the reference value, the controller determines that the resident falls.

6. The apparatus of any one of claims 1 to 5, further comprising a second sensor unit configured to measure a position of the resident,
wherein the second sensor unit senses whether or not the resident falls down on a floor of the indoor space due to the falling behavior of the resident.

7. The apparatus of claim 6, wherein the second sensor unit measures a distance between the second sensor unit and the resident.

8. The apparatus of claim 6 or 7, wherein the second sensor unit senses a change in the movement of the resident by modeling the indoor space into a 3D image.

9. The apparatus of any one of claims 6 to 8, wherein the second sensor unit is disposed at a higher height than the specific height.

10. The apparatus of claim 9, wherein the second sensor unit is disposed on a ceiling of the indoor space.

11. The apparatus of any one of claims 6 to 10, wherein the second sensor unit comprises at least one of an impulse-radio ultra-wideband (IR-UWB) sensor, a light detection and ranging (LIDAR) device, a frequency-modulated continuous-wave radio detection and ranging (FMCW RADAR) device, or a Doppler RADAR device.

12. The apparatus of any one of claims 1 to 11, further comprising a database configured to store behavior pattern information about movements of humans,
wherein the controller determines a state of the resident by comparing a pattern of movements of the resident sensed by the first sensor unit with the behavior pattern information stored in the database.

13. The apparatus of claim 12, wherein:
the database stores information about repetitive movements being capable of occurring in the indoor space; and
the controller determines that, out of the pattern of the movements of the resident sensed by the first sensor unit, information being the same as the information about repetitive movements stored in the database is not the pattern of the movements of the resident.

14. The apparatus of any one of claims 1 to 13, further comprising a communication unit configured to output a warning message, if the controller determines that the resident is in the dangerous state.
